# EUROPEAN PATENT SPECIFICATION

(11) **EP 4 108 144 B1**
(45) Date of publication and mention of the grant of the patent: **20.12.2023**
(21) Application number: 21180953.8
(22) Date of filing: 22.06.2021
(51) Int. Cl.: A47J 31/52

(54) **COFFEE MACHINE**
KAFFEEMASCHINE
MACHINE À CAFÉ

(43) Date of publication of application: 28.12.2022
(73) Proprietor: BSH Hausgeräte GmbH, 81739 München (DE)
(72) Inventor: Botros, Peter, 83301 Traunreut (DE)

(56) References cited:
- EP-A1- 1 645 215
- EP-A1- 3 097 827
- WO-A1-2015/118495

## Description

The present invention relates to a coffee machine, in particular a fully automatic coffee machine for preparing hot beverages, such as coffee. The present invention also relates to a corresponding method for operating a coffee machine.

The known coffee machines are formed as a fully automatic machine which is intended to simplify the user's activities associated with the preparation of various types of coffee. In principle the customer only needs to actuate a certain program key to obtain a desired coffee beverage. The control of the machine occurs according to factory-set programmed parameters which are designed for an optimum result for each certain type of beverage. These parameters are determined in advance through tasting and operational tests. These parameters may for example comprise the grinding degree of the coffee beans, the amount of fed ground coffee, the water pressure that go through the ground coffee, the amount of water and the dispensing time. The maintenance of these parameters for each brewing process is monitored automatically and, with larger deviations, automatically corrected, without the user having to intervene.

The grinding degree of the grounds brewed makes a decisive contribution to the coffee quality. If the grinding degree is too fine, then this can lead to the brewing process taking an unreasonable length of time or it even cancels, because a brewing unit is blocked. If it is too coarse, the brewing water passes through the grounds too quickly, producing a negative effect on the taste of the coffee. In particular, for the preparation of a good espresso a minimum contact time of the brewing water with the coffee is required. Also finely ground grounds offer more contact area with the brewing water, leading to better extraction and more aroma. In addition, for the development of the taste and the formation of a desirable creamy layer on the espresso it is necessary that the pressed grounds layer offers adequate resistance to the pump in order to establish a brewing pressure of between 6 and 9 bar. With a fine grinding grade this has a decisive favorable effect.

Beside coffee beans and temperature, pressure is an important factor in the extraction during brewing process. It is important to maintain and control the desired pressure through fluid system during the coffee preparation process. In both fully automatic espresso machines and porta filter machines the pressure arises through the pump pumping water against coffee powder. For the user it is important to know the current pressure, which helps to identify if the coffee powder being too fine causing increasing pressure. Higher pressure could be also the result of calcified fluid system. A malfunctioning pump could lead of lower pressure but also for the user, it is a fun factor to have the pressure in view.

The document EP3097827A1 discloses a hot beverage preparation device, in particular a fully automatic coffee machine, with a pump which has an electric pump motor and is designed to pump a liquid in the hot beverage preparation device, with a sensor which is designed to measure an operating variable of the electric pump motor, which allows a statement about the liquid flow generated by the pump, and with a control device which is coupled to the electric pump motor and the sensor and which is designed to control the electric pump motor based on the operating variable detected by the sensor.

Known automatic coffee machines are complicated and expensive, one of the reason why they comprise a lot of sensors as for example pressure sensor that measure pressure in the brewing unit and a processor unit uses this value for automatic adaptation other parameters of the brewing, including degree of the coffee bean grind. Over time, pressure sensors can become unresponsive.

The objective of the present invention is to provide a coffee machine that is cheap and easy to produce, and which requires less frequent inspections and offers the user a simple and economical option of adapting the degree of grinding by setting the grinder in a coffee machine. Another objective of the present invention is to provide possibility to keep an eye on the fluid system pressure.

In accordance with the present invention, there is provided a coffee machine, in particular a fully automatic coffee machine, comprises a pump with an electric pump motor which is embodied to pump a liquid and causing the liquid flow in the coffee machine, a brewing unit, a sensor which is provided to measure parameters of the electric current supplying the electric pump motor, a processing unit for calculating and adjusting the coffee brewing parameters and for storing data, a pump supply unit which is coupled to the electric pump motor and to the sensor which is provided to detect an operating parameter of the electric current supplying the electric pump motor, a control unit for controlling at least the pump supply unit, wherein the control unit is communicatively connected to the processing unit, a user interface with a display which is communicatively connected with the processing unit, and the said display displays the liquid pressure produced by the pump in the brewing unit, wherein the liquid pressure in the brewing unit is calculated by the processing unit based on the stored data in relation with the operating parameter measured by the sensor.

Additionally the present invention comprises a method for operating the coffee machine according to present invention, which consist of the following steps: pumping a liquid and causing the liquid flow in the coffee machine with the pump, detecting an operating parameter of the electric pump motor which make it possible to provide the statement about the liquid pressure produced by the pump in a brewing unit, calculating the liquid pressure on the basis of the detected operating parameter which is phase control of the electric pump motor with relation to the characteristic values and/or characteristic curves which are stored in a processing unit, conversion of the calculated values into a display data, display of the display data on a display in the form of a dial graphic gauge.

The processing unit comprising means of storing data, means of comparing the real-time data to a set of stored data and/or threshold parameters, stored in the controller's memory associated with the brewing system, and means for processing data to determine whether a change to the parameters should be made, and means of altering at least one of the relevant brewing parameters, when required to bring said real time parameter in line with said recorded parameter to obtain consistent high quality of the dispensed beverage. The control unit comprises means for ongoing monitoring sensors and management units of the coffee machine, particularly to receive a measurement data and send a control data.

According to the invention, the coffee machine is provided with a display which is used, among other things, to display the real-time value of water pressure that is delivered to the brewing system. The value of the said water pressure is calculated and presented to a user based on the measured parameters of the electric pump motor and data as characteristic values and/or characteristic curves saved for instance in the processing unit memory, therefore without using expensive and required servicing the pressure sensor the user can observe the water pressure and therefore can adapt the grinding degree of the coffee beans or regulate power of the pump.

In the preferred embodiment of the invention the processing unit has stored therein characteristic values and/or characteristic curves, which relate the operating parameter of the electric pump motor phase control in relation with the pressure produced by the pump in the coffee machine brewing unit, thereby provides direct access to the stored data which improves stability and speed of processing data.

In the another preferred embodiment of the invention the processing unit is embodied to calculate the liquid pressure in the brewing unit on the basis of the detected operating parameter and the characteristic values and/or characteristic curves. Characteristic values and/or the characteristic curves describes value of the pressure in the function of the operating parameter, therefore based on this data and measured value of the operating parameter, the processing unit can calculate value of the pressure either directly or by approximation.

Advantageously, the coffee machine comprises a grinder adapted to grind coffee beans and embodied with a setting device for the user setting of the grinding grade of the grinder, thereby the user can adapt degree of the grinding coffee beans to achieve required effect.

Advantageously, the display is adapted to display the value of the liquid pressure produced by the pump in the brewing unit such that the value of the liquid pressure is presented on the display in the form of a dial graphic gauge and comprises a display bar in a circle form with a gap indicated at a center of the dial graphic gauge and a needle to show the value of the liquid pressure with relation to the display bar, wherein the gap applies to the range of the desired pressure in the brewing unit.

In the preferred embodiment of the invention there is provided additional steps of the method for operating the coffee machine according to present invention, as follow: recognizing by user if the coffee beans are properly ground for the brewing process, which follows on the basis of observation of a needle position of the dial graphic gauge. If the needle is in the range of a gap it means that coffee beans are properly ground. If the needle is not in the range of the gap changing of a grinding grade setting on the grinder by the user using a setting device. It provides simple method to obtain.

Further benefits and advantages of the present invention will become apparent after a careful reading of the detailed description with appropriate reference to the accompanying drawings.

In the drawings:
Fig. 1 is a perspective view of a coffee machine in accordance with the preferred embodiment of the present invention.
Fig. 2 is a block view of the coffee machine in accordance with a preferred embodiment of the present invention.

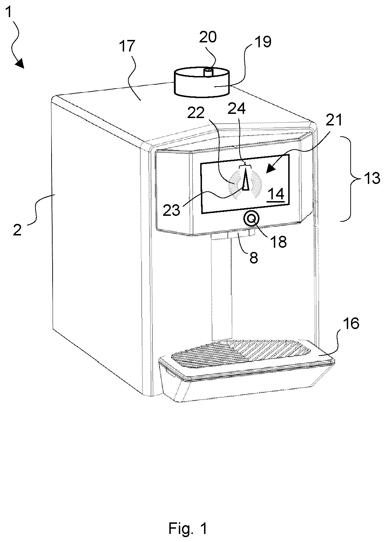

Reference is made to Fig. 1 which is a perspective view of a coffee machine in accordance with the preferred embodiment of the present invention. The coffee machine 1 comprises a cuboid housing 17 with a water tank 2 which fits into the housing 17 and that is used as a source of the fresh water for preparation of the beverage, a pump 4 with an electric pump motor 4' and is embodied to pump a liquid and causing the liquid flow 15 in the coffee machine 1, a brewing unit 7, a sensor 10 which is provided to measure parameters of the electric current supplying the electric pump motor 4'. Furtherly, the coffee machine 1 comprises a processing unit 12 for calculating and adjusting the coffee brewing parameters and for storing data, a pump supply unit 9 which is coupled to the electric pump motor 4' and to the sensor 10 which is provided to detect an operating parameter "A" and a control unit 11 for controlling at least the pump supply unit 9, wherein the control unit 11 is communicatively connected to the processing unit 12. Additionally, the coffee machine 1 comprises a user interface 13 which is arranged on the upper portion of the front part of the coffee machine 1 and that is visually extracted from the housing 17. The user interface 13 is equipped with a display 14 that is communicatively connected with the processing unit 12. The user interface 13 is equipped with a control means 18 for controlling the operational mode of the coffee machine by the user, as for instance selection of the desired type of drink, its strength and quantity etc. In the bottom portion of the user interface 13, a coffee discharge unit 8 is arranged. Directly below the discharge unit 8, a drip tray grid is mounted for supporting a drink vessel and for covering a drip tray 16. The display 14 is adapted for displaying the liquid pressure produced by the pump 4 in the brewing unit 7, wherein the liquid pressure in the brewing unit 7 is calculated by the processing unit 12 based on the stored therein characteristic values and/or characteristic curves describing value of the liquid water pressure in the brewing unit 7 in the function of the phase factor of the electric pump motor 4', in relation to the measured the phase control factor of the electric pump motor 4' by the sensor 10. The said characteristic values and/or characteristic curves are developed for instance in the laboratory with using the coffee machine according to the present invention, which is temporary provided with precise pressure sensor that measures liquid pressure in the brewing unit 7. The display 14 is in the form of a dial graphic gauge 21 and comprises a display bar 22 that is in a circle form with a gap 24 which is indicated at a middle of the dial graphic gauge 21 and a needle 23 to show the value of the liquid pressure with relation to the display bar 22, wherein the gap 24 applies to the range of the desired pressure in the brewing unit 7. The coffee machine 1 comprises a grinder 19 that is adapted to grind coffee beans and embodied with a setting device 20 for the user setting of the grinding grade of the grinder 19. The grinder 19 is provided in the upper portion of the coffee machine 1. Thanks to the display of the real-time value of the water pressure in the brewing unit 7 on the display 14, the user can adapt the degree of grinding of coffee beans to achieve properly ground the coffee powder for the brewing process. On the basis of observation the needle's 23 of the dial graphic gauge 21 position the user can adapt the degree of grinding of coffee beans. When the needle 23 is in the range of a gap 24 it means that coffee beans are properly ground, while when the needle 23 is not in the range of the gap 24 the user can change the degree by using a setting device 20 of the grinder 19.

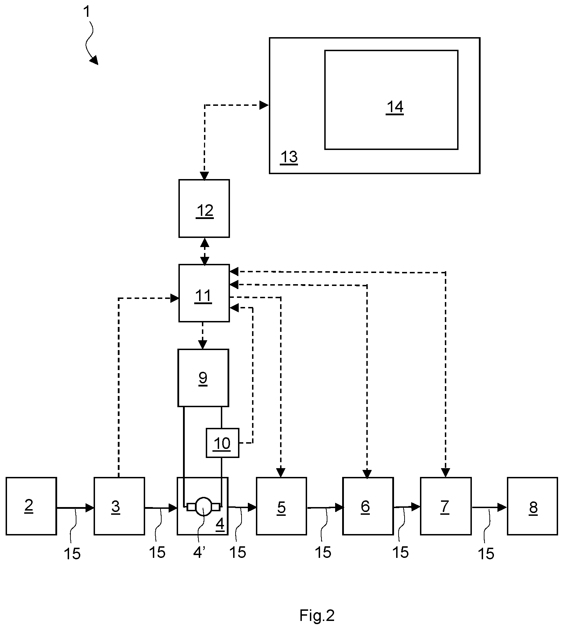

Reference is made to Fig. 2 which is a block view of the coffee machine in accordance with a preferred embodiment of the present invention. The coffee machine 1 comprises the water tank 2, a flowmeter 3, the pump 4, a heater 5, a valve 6, the brewing unit 7 and the coffee discharge unit 8 are fluidly connected one by one thereby form the passage for a water for preparing beverage, which a flow 15 is caused by the pump 4 that is driven by electric motor 4'. The water tank 2 is the source of the fresh water for preparation of the beverage. The pump 4 with the electric pump motor 4', comprises a sensor 10 which is provided to measure parameters of the electric current supplying the electric pump motor 4'. Furtherly, the coffee machine 1 comprises a processing unit 12 for calculating and adjusting the coffee brewing parameters and for storing data, a pump supply unit 9 which is coupled to the electric pump motor 4' and to the sensor 10 which is provided to detect an operating parameter "A" and a control unit 11 for reading signals from the flowmeter 3, the sensor 10, the valve 6 about its operational mode, the brewing unit 7 about its operational mode as well, and for controlling the pump supply unit 9, the heater 5, the valve 6 and the brewing unit wherein the control unit 11 is communicatively connected to the processing unit 12. Additionally, the coffee machine 1 comprises a user interface 13. The user interface 13 is equipped with a display 14 that is communicatively connected with the processing unit 12. The display 14 is adapted for displaying the liquid pressure produced by the pump 4 in the brewing unit 7, wherein the liquid pressure in the brewing unit 7 is calculated by the processing unit 12 based on the stored therein characteristic values and/or characteristic curves describing value of the water pressure in the brewing unit 7 in the function of the power phase control factor of the electric pump motor 4', in relation to the measured the said power phase control factor of the electric pump motor 4' by the sensor 10. The said characteristic values and/or characteristic curves are developed for instance in the laboratory, at the production stage with using the coffee machine according to the present invention, which is temporary provided with precise pressure sensor that measures liquid pressure in the brewing unit 7.

Accordingly, the coffee machine 1 is provided with a display 14 which is used to display the real-time value of water pressure that is delivered to the brewing system 7. The value of the said water pressure is calculated and presented to the user based on the measured operating parameter "A", namely the pump's 4 current phase control and data as characteristic values and/or characteristic curves saved at the production stage in the processing unit memory 12, therefore without using expensive and required servicing the pressure sensor the user can observe the water pressure on the display 14 and therefore can adapt the grinding degree of the coffee beans or regulate power of the pump. This is additional software function so it does not cause additional costs to have it.

Although the invention has been explained in relation to its preferred embodiment(s) as mentioned above, it is to be understood that many other possible modifications and variations can be made without departing from the scope of the present invention as defined by the appended claims.

### List of reference sings

- 1: coffee machine
- 2: water tank
- 3: flowmeter
- 4: pump
- 4': electric pump motor
- 5: heater
- 6: valve
- 7: brewing unit
- 8: coffee discharge unit
- 9: pump supply unit
- 10: sensor
- 11: controlling unit
- 12: processing unit
- 13: user interface
- 14: display
- 15: liquid flow
- 16: drip tray
- 17: housing
- 18: control means
- 19: coffee grinder
- 20: setting device
- 21: graphic gauge display
- 22: graphic bar
- 23: needle
- 24: gap
- A: operating parameter

## Claims

1. A coffee machine (1), in particular a fully automatic coffee machine comprises,
- a pump (4) with an electric pump motor (4') and is embodied to pump a liquid and causing the liquid flow (15) in the coffee machine (1),
- a brewing unit (7),
- a sensor (10) which is provided to measure parameters of the electric current supplying the electric pump motor (4'),
- a processing unit (12) for calculating and adjusting the coffee brewing parameters and for storing data,
- a pump supply unit (9) which is coupled to the electric pump motor (4') and to the sensor 10 which is provided to detect an operating parameter (A) of the electric current supplying the electric pump motor (4'),
- a control unit (11) for controlling at least the pump supply unit (9), wherein the control unit (11) is communicatively connected to the processing unit (12),
- a user interface (13) with a display (14) communicatively connected with the processing unit (12), wherein the display (14) displays the liquid pressure produced by the pump (4) in the brewing unit (7), wherein the liquid pressure in the brewing unit (7) is calculated by the processing unit (12) based on the data stored in relation with the operating parameter (A) measured by the sensor (10).

2. The coffee machine according to claim 1, **characterized in that** the processing unit (12) has stored therein characteristic values and/or characteristic curves, which relate the operating parameter (A) of the electric pump motor (4') phase control in relation with the pressure produced by the pump (4) in the coffee machine brewing unit (7).

3. The coffee machine according to claim 2, **characterized in that** the processing unit (12) is embodied to calculate the liquid pressure in the brewing unit (7) on the basis of the detected operating parameter (A) and the characteristic values and/or characteristic curves.

4. The coffee machine according to any of the preceding claims, **characterized in that** it comprises a grinder (19) adapted to grind coffee beans and embodied with a setting device (20) for the user setting of the grinding grade of the grinder (19).

5. The coffee machine according to claim 4, **characterized in that** the said liquid pressure is presents on the display (14) in the form of a dial graphic gauge (21) and comprises a display bar (22) in a circle form with a gap (24) indicated at a center of the dial graphic gauge (21) and a needle (23) to show the value of the liquid pressure with relation to the display bar (22), wherein the gap (24) applies to the range of the desired pressure in the brewing unit (7).

6. Method for operating a coffee machine (1) with a pump (4) which has an electric pump motor (4') according to any of the claims 1 - 5, which consist of the following steps:
- pumping a liquid and causing the liquid flow (15) in the coffee machine (1) with the pump (4),
- detecting an operating parameter (A) of the electric pump motor (4') which make it possible to provide the statement about the liquid pressure produced by the pump (4) in a brewing unit (7),
- calculating the liquid pressure on the basis of the detected operating parameter (A) which is phase control of the electric pump motor (4') with relation to the characteristic values and/or characteristic curves which are stored in a processing unit (12),
- conversion of the calculated values into a display data;
- display of the display data on a display (14) in the form of a dial graphic gauge (21).

7. Method for operating the coffee machine according to claim 6 **characterized in that** it comprises additional steps with:
- recognizing by user if the coffee beans are properly ground for the brewing process, which follows on the basis of observation of a needle (23) position of the dial graphic gauge (21). If the needle (23) is in the range of a gap (24) it means that coffee beans are properly ground.
- if the needle (23) is not in the range of the gap (24) changing of a grinding grade setting on the grinder (19) by the user using a setting device (20).

## Patentansprüche

1. Kaffeemaschine (1), insbesondere Kaffeevollautomat, mit Folgendem:
- einer Pumpe (4) mit einem Pumpenelektromotor (4'), die so ausgeführt ist, dass sie eine Flüssigkeit pumpt und für den Flüssigkeitsstrom (15) in der Kaffeemaschine (1) sorgt,
- einer Brüheinheit (7),
- einem Sensor (10), der zum Messen von Parametern für den elektrischen Strom vorgesehen ist, mit dem der Pumpenelektromotor (4') versorgt wird,
- einer Verarbeitungseinheit (12) zum Berechnen und Anpassen der Kaffeebrühparameter und zum Speichern von Daten,
- einer Pumpenversorgungseinheit (9), die mit dem Pumpenelektromotor (4') gekoppelt ist und mit dem Sensor (10), der dafür vorgesehen ist, einen Betriebsparameter (A) des elektrischen Stroms zu erfassen, mit dem der Pumpenelektromotor (4') versorgt wird,
- einer Steuereinheit (11) zum Steuern von zumindest der Pumpenversorgungseinheit (9), wobei die Steuereinheit (11) für den Datenaustausch mit der Verarbeitungseinheit (12) verbunden ist,
- einer Benutzerschnittstelle (13) mit einer Anzeige (14), die für den Datenaustausch mit der Verarbeitungseinheit (12) verbunden ist, wobei die Anzeige (14) den von der Pumpe (4) in der Brüheinheit (7) erzeugten Flüssigkeitsdruck anzeigt, wobei der Flüssigkeitsdruck in der Brüheinheit (7) von der Verarbeitungseinheit (12) auf der Grundlage der Daten berechnet wird, die in Bezug auf den vom Sensor (10) gemessenen Betriebsparameter (A) gespeichert wurden.

2. Kaffeemaschine nach Anspruch 1, **dadurch gekennzeichnet, dass** in der Verarbeitungseinheit (12) Kennwerte und/oder Kennlinien gespeichert sind, die den Betriebsparameter (A) für die Phasenanschnittsteuerung des Pumpenelektromotors (4') zu dem von der Pumpe (4) in der Kaffeemaschinenbrüheinheit (7) erzeugten Druck in Beziehung setzen.

3. Kaffeemaschine nach Anspruch 2, **dadurch gekennzeichnet, dass** die Verarbeitungseinheit (12) so ausgeführt ist, dass sie den Flüssigkeitsdruck in der Brüheinheit (7) auf der Grundlage des erfassten Betriebsparameters (A) und der Kennwerte und/oder Kennlinien berechnet.

4. Kaffeemaschine nach einem der vorhergehenden Ansprüche, **dadurch gekennzeichnet, dass** sie eine Mühle (19) umfasst, die so ausgelegt ist, dass sie Kaffeebohnen mahlt, und mit einer Einstellvorrichtung (20) ausgeführt ist, über die der Benutzer den Mahlgrad der Mühle (19) einstellen kann.

5. Kaffeemaschine nach Anspruch 4, **dadurch gekennzeichnet, dass** der Flüssigkeitsdruck auf der Anzeige (14) in Form einer grafischen Druckanzeige (21) präsentiert ist und einen kreisförmigen Anzeigestreifen (22) mit einer Lücke (24) in der Mitte der grafischen Druckanzeige (21) und einen Zeiger (23) zum Anzeigen des Werts für den Flüssigkeitsdruck in Bezug zum Anzeigestreifen (22) umfasst, wobei die Lücke (24) für den Solldruckbereich in der Brüheinheit (7) steht.

6. Verfahren zum Betreiben einer Kaffeemaschine (1) mit einer Pumpe (4), die einen Pumpenelektromotor (4') aufweist, nach einem der Ansprüche 1 bis 5 mit folgenden Schritten:
- Pumpen einer Flüssigkeit und Bewirken des Flüssigkeitsstroms (15) in der Kaffeemaschine (1) mit der Pumpe (4),
- Erfassen eines Betriebsparameters (A) des Pumpenelektromotors (4'), wodurch es möglich wird, eine Angabe zu dem von der Pumpe (4) in einer Brüheinheit (7) erzeugten Flüssigkeitsdruck bereitzustellen,
- Berechnen des Flüssigkeitsdrucks auf der Grundlage des erfassten Betriebsparameters (A), bei dem es sich um eine Phasenanschnittsteuerung des Pumpenelektromotors (4') handelt, in Bezug auf die in einer Verarbeitungseinheit (12) gespeicherten Kennwerte und/oder Kennlinien,
- Umwandlung der berechneten Werte in Anzeigedaten,
- Anzeigen der Anzeigedaten auf einer Anzeige (14) in Form einer grafischen Druckanzeige (21).

7. Verfahren zum Betreiben der Kaffeemaschine nach Anspruch 6, **dadurch gekennzeichnet, dass** es folgende zusätzliche Schritte umfasst:
- Erkennen durch den Benutzer, ob die Kaffeebohnen für den Brühvorgang ordnungsgemäß gemahlen werden, was auf der Grundlage des Beobachtens der Position eines Zeigers (23) auf der grafischen Druckanzeige (21) erfolgt:
- wenn sich der Zeiger (23) im Bereich einer Lücke (24) befindet, bedeutet dies, dass die Kaffeebohnen ordnungsgemäß gemahlen werden,
- wenn sich der Zeiger (23) nicht im Bereich der Lücke (24) befindet, Ändern einer Mahlgradeinstellung an der Mühle (19) durch den Benutzer mithilfe einer Einstellvorrichtung (20).

## Revendications

1. Machine à café (1), en particulier machine à café entièrement automatique comprenant :
- une pompe (4) comprenant un moteur électrique de pompe (4') et qui est conçue pour pomper du liquide afin de produire l'écoulement de liquide (15) dans la machine à café (1),
- une unité de percolation (7),
- un capteur (10) qui est agencé pour mesurer des paramètres du courant électrique alimentant le moteur électrique de pompe (4')
- une unité de traitement (12) pour calculer et ajuster les paramètres de percolation de café et pour stocker des données,
- une unité d'alimentation de pompe (9) qui est couplée au moteur électrique de pompe (4') et au capteur (10) qui est agencé pour détecter un paramètre de fonctionnement (A) du courant électrique alimentant le moteur électrique de pompe (4'),
- une unité de commande (11) pour commander au moins l'unité d'alimentation de pompe (9), dans laquelle l'unité de commande (11) est couplée en communication à l'unité de traitement (12),
- une interface utilisateur (13) comprenant un affichage (14) connecté en communication à l'unité de traitement (12),
dans laquelle l'affichage (14) affiche la pression de liquide produite par la pompe (4) dans l'unité de percolation (7), et
dans laquelle la pression de liquide dans l'unité de percolation (7) est calculée par l'unité de traitement (12) sur la base des données stockées en liaison avec le paramètre de fonctionnement (A) mesuré par le capteur (10).

2. Machine à café selon la revendication 1, **caractérisée en ce que** l'unité de traitement (12) a stocké dans celle-ci des valeurs caractéristiques et/ou des courbes caractéristiques, qui établissent une relation du paramètre de fonctionnement (A) de la commande de phase du moteur électrique de pompe (4') avec la pression produite par la pompe (4) dans l'unité de percolation (7) de la machine à café.

3. Machine à café selon la revendication 2, **caractérisée en ce que** l'unité de traitement (12) est conçue pour calculer la pression du liquide dans l'unité de percolation (7) sur la base du paramètre de fonctionnement détecté (A) et des valeurs caractéristiques et/ou des courbes caractéristiques.

4. Machine à café selon l'une quelconque des revendications précédentes, **caractérisée en ce qu'**elle comprend un broyeur (19) adapté pour broyer des grains de café et réalisé avec un dispositif de réglage (20) pour un réglage par l'utilisateur du degré de mouture du broyeur (19).

5. Machine à café selon la revendication 4, **caractérisée en ce que** ladite pression de liquide est représentée sur l'affichage (14) sous la forme d'un d'indicateur graphique à cadran (21) et comprend une barre de visualisation (22) dans une forme de cercle avec un intervalle (24) indiqué au centre de l'indicateur graphique à cadran (21) et une aiguille (23) pour indiquer la valeur de la pression de liquide en lien avec la barre de visualisation (22), dans laquelle l'intervalle (24) s'applique à la gamme de la pression souhaitée dans l'unité de percolation (7).

6. Procédé de fonctionnement d'une machine à café (1) comprenant une pompe (4) dotée d'un moteur électrique de pompe (4') selon l'une quelconque des revendications 1 à 5, le procédé comprenant les étapes suivantes :
- le pompage d'un liquide et l'induction de l'écoulement de liquide (15) dans la machine à café (1) au moyen de la pompe (4),
- la détection d'un paramètre de fonctionnement (A) du moteur électrique de pompe (4') qui permet de fournir l'état de la pression de liquide produite par la pompe (4) dans une unité de percolation (7),
- le calcul de la pression de liquide sur la base du paramètre de fonctionnement détecté (A) qui est une commande de phase du moteur électrique de pompe (4') en liaison avec les valeurs caractéristiques et/ou les courbes caractéristiques qui sont stockées dans une unité de traitement (12),
- la conversion des valeurs calculées en des données d'affichage, et
- l'affichage des données d'affichage sur un affichage (14) sous la forme d'un indicateur graphique à cadran (21).

7. Procédé de fonctionnement de la machine à café selon la revendication 6, **caractérisé en ce qu'**il comprend les étapes supplémentaires suivantes :
- reconnaissance par l'utilisateur si les grains de café sont correctement moulus pour le processus de percolation, suivant une observation d'une position d'aiguille (23) de l'indicateur graphique à cadran (21), à savoir si l'aiguille (23) est située dans un intervalle (24), cela signifie que les grains de café sont correctement moulus, et
- si l'aiguille (23) n'est pas située dans l'intervalle (24), le changement d'un réglage du degré de mouture sur le broyeur (19) par l'utilisateur au moyen d'un dispositif de réglage (20).
